# EUROPEAN PATENT APPLICATION

(11) **EP 1 271 905 A2**
(43) Date of publication of application: **02.01.2003**
(21) Application number: 02396093.3
(22) Date of filing: 17.06.2002
(51) Int. Cl.: H04M 3/42

(54) **Recording data in a telecommunication system**

(30) Priority: 21.06.2001 FI 20011335
(71) Applicant: Nokia Corporation, 02150 Espoo (FI)
(72) Inventor: Torvinen, Marko, 02810 Espoo (FI)
(74) Representative: Valkeiskangas, Tapio Lassi Paavali

(57) **Abstract**

A method for recording data in a telecommunication system and a telecommunication system used for data transmission by at least two customers having one or more terminals (20) connected to the system, whereby the system is arranged to transmit data between the terminals of each customer, and the telecommunication system comprises at least one recorder (10) common for at least two customers, and the system is also arranged to record the data transmitted in the system between two or more parties into said recorder in encrypted form by encrypting the data customer-specifically according to which customer's terminal at least one of said parties is.

## Description

### BACKGROUND OF THE INVENTION

The invention relates to recording data in a telecommunication system and particularly in a telecommunication system used for data transmission by at least two customers.

To record transmitted data is important in many telecommunication systems so as to be able to repeat the transmitted data, such as speech or data information, if required; for example, a call made can, if necessary, be listened to afterwards anew. The systems employed by the authorities in particular include different requirements set for recording data, as such systems transmit for instance emergency calls and similar traffic associated for example with the activities of the police or the fire department, and such calls should be able to be repeated later if need be, for instance, when investigating an accident associated with the call.

An example of such a telecommunication system employed by the authorities is the TETRA (Terrestrial Trunked Radio) system. Several customers may simultaneously employ the infrastructure of the TETRA system. Here, a customer refers, for instance, to a governmental or company organization or the like. Thus, each customer has their specific terminals, which utilize the data transmission the TETRA system offers between the customer terminals. Different customers may, however, use the system fully irrespective of one another and separately. The system merely offers each customer data transmission in such a manner that the data transmission of each customer is, if necessary, protected from other customers and outsiders. If need be, data transmission can also be arranged between the terminals of different customers or between a customer terminal within the system and a terminal of an external system such as the public switched telephone network.

A prior art solution, for instance, in a telecommunication system like the TETRA system described above for recording data associated with a particular customer is to employ one or more customer-specific recorders. In this system, the data associated with a customer refers to data transmitted between one or more parties, when at least one of said parties is the terminal of the customer concerned, such as the police organization. Here, the terminal, in turn, refers to a device able to send and/or receive data connected to the system either directly or through another system. The use of customer-specific recorders is necessary in the prior art systems, so that the data of each customer remains confidential. In the TETRA system, the recorders may, for instance, be exchange-specific or a recorder common for several exchanges may be available for each customer. The recorders may alternatively also be associated with the dispatcher systems of the TETRA system; each customer being typically provided with at least one such dispatcher system that the customer is able to use for controlling the operation of the terminals thereof. Consequently, the number of recorders may be one or more in each dispatcher system.

The problem with the above system is that the number of recorders in the system may increase considerably, when each customer requires at least one specific recorder and in practice frequently even several, so that the recorded data of each customer remains confidential. The large number of recorders makes the system complicated and causes significant costs to the acquisition investments and maintenance.

### BRIEF DESCRIPTION OF THE INVENTION

It is an object of the invention to provide a method and an apparatus implementing the method so as to solve the above problems. The object of the invention is achieved with a method, system and recorder, characterized by what is disclosed in independent claims 1, 11 and 19. The preferred embodiments of the invention are disclosed in the dependent claims.

The invention is based on the idea that a telecommunication system employed by two or more customers uses at least one recorder common for at least two customers of the system in such a manner that the data of different customers is recorded into the recorder so that the data is encrypted using customer-specific encryption, whereby only the customer in question knows the decryption.

An advantage with the method and system of the invention is that the telecommunication system does not necessarily require a large number of recorders, since at least some of the customers are able to employ one or more common recorders. The structure of the recording mechanism in the system is also simplified, as the number of required recorders is reduced.

In accordance with a preferred embodiment of the invention, each customer is provided with a public cryptographic key or a similar cryptographic key, for instance in accordance with the RSA method, whereby the customer data can be encrypted during recording using the customer's public key; and then again the customer may decrypt the data using the specific corresponding cryptographic key. In such a case, the advantage is that the telecommunication system no longer needs to know the cryptographic key required for decryption, and thus only the customer herself/himself is able to carry out the decryption, which naturally further improves the information security regarding the recorded data.

### BRIEF DESCRIPTION OF THE DRAWINGS

In the following the invention will be described by means of the preferred embodiments with reference to the accompanying drawings, in which:
Figure 1 is a block diagram showing a basic structure of the TETRA system,
Figure 2 is a block diagram showing a telecommunication system of the invention in accordance with a preferred embodiment of the invention, and
Figure 3 is a block diagram showing the telecommunication system of the invention in accordance with another preferred embodiment of the invention.

### DETAILED DESCRIPTION OF THE INVENTION

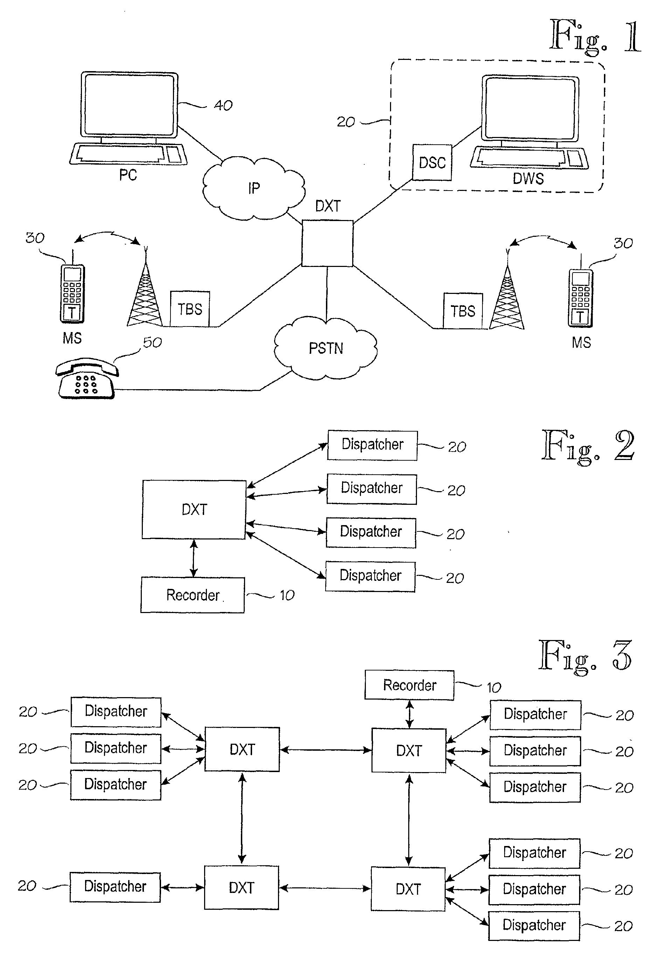

Even though the following description and Figures refer mainly to the network elements according to the TETRA system, the application of the invention is by no means restricted thereto, but can be applied to other telecommunication systems as well. It should be noted that the Figures only show the elements that are essential in order to comprehend the invention and that the structure of the system may deviate from the one presented without being relevant to the basic idea of the invention. It should also be noted that a real telecommunication system might comprise more of each element than the number shown in Figure 1. Figure 1 illustrates the basic structure of the TETRA system. Mobile Stations 30 (MS) communicate over the radio path with TETRA Base Stations (TBS). Each base station TBS is connected using a junction line to a Digital Exchange for TETRA (DXT) of the fixed transmission network. The digital exchanges for TETRA, DXT, are connected using a fixed connection to other exchanges and to a Digital Central Exchange for TETRA (DXTc, not shown), which is an exchange to which other exchanges DXT and/or other digital central exchanges for TETRA, DXTc, are connected in order to provide alternative traffic routes. The external connection interfaces according to the TETRA standard to the Public Switched Telephone Network (PSTN), the Integrated Services Digital Network (ISDN, not shown), the Private Automatic Branch Exchange (PABX, not shown) and to the Packet Data Network (PDN), for example an IP network such as the Internet, may be located in one or more exchanges DXT. Furthermore, the Figure shows a Dispatcher System (DS) 20 connected to the exchange DXT that is formed of a Dispatcher Station Controller (DSC) and a Dispatcher Workstation (DWS) connected thereto. The Dispatcher (not shown separately) controls the calls and other operations of the mobile stations 30 and other possible terminals through the dispatcher workstation DWS. Several customers may simultaneously employ the infrastructure of the TETRA system, whereby the each customer has for instance their specific terminals, which utilize the data transmission offered by the TETRA system between the customer terminals. Each customer is typically provided with at least one dispatcher system 20 that monitors and controls the operations of the terminals 30 of the customer in question. The dispatcher system 20 can also be considered as a terminal, as it may communicate, i.e. send and receive data, with the other terminals in the telecommunication system, such as the mobile stations 30. Figure 1 also shows a terminal 40, which may be a personal computer (PC) or another corresponding data terminal, connected to the TETRA system through the packet switched network IP. Data information or speech information can be transferred between the terminal 40 and the terminals 20 and 30 for instance using the Voice Over Internet Protocol (VolP) standard. The Figure also shows a terminal 50, such as a conventional phone, which is connected to the TETRA system through the public switched telephone network PSTN.

Figure 2 is a block diagram showing a telecommunication system in accordance with a preferred embodiment of the invention. For clarity, the Figure shows only the exchange DXT of the TETRA system and four dispatcher systems 20 connected thereto. It is assumed by way of example that each customer of the telecommunication system in Figure 2 has one dispatcher system 20, whereby four customers employ the telecommunication system shown in the Figure. The Figure does not show the other terminals 30, 40 and 50 connected to the telecommunication system for the sake of clarity. However, in addition to the dispatcher system 20 each customer is typically provided with a number of terminals, such as mobile stations 30, connected to the telecommunication system, as the one described above in Figure 1. In accordance with the basic idea of the invention, the telecommunication system comprises at least one recorder 10, which is common for at least two customers of the telecommunication system. The recorder 10 thus operates as a recording server in the telecommunication system. The recorder 10 may be any recorder, which allows recording data transferred between the terminals 20, 30, 40 and/or 50, such as a call made between two terminals or a part thereof. The recorder 10 may for instance be a tape recorder (magnetic or optic), a disc recorder (for example a magnetic disc such as a hard disc or an optic disc such as a compact disc) or a semiconductor memory (such as a RAM memory) depending on the application, however, without being relevant to the basic idea of the invention. The recorder 10 may also be a combination of two or more recorders of different types; the recorder 10 may for instance comprise a RAM buffer memory and a tape recorder. In the example shown in Figure 2, the recorder is connected to the exchange DXT and is common for four customers. Also in accordance with the invention, the recorder 10 records data associated with all four customers and transmitted in the system. The data associated with a customer refers to the data transmitted in the telecommunication system between one or more parties, when at least one of the parties is the terminal 20, 30, 40 or 50 of the customer concerned. Typically such data is for example data or speech information transmitted between two terminals 30 of a particular customer or between the terminal 30 and the dispatcher system 20 in connection with the TETRA system or the telecommunication system comprising the TETRA system. One or more parties involved in the data transmission may, however, also be the terminal 20 or 30 of another customer or another terminal 40 or 50 connected to the TETRA system. In accordance with the invention, data transmitted between one or more parties 20, 30, 40 or 50 in the telecommunication system is recorded into the recorder 10 in encrypted form by encrypting the data customer-specifically according to which customer's terminal at least one party involved in the data transmission is. If the parties involved in a particular data transmission are for instance two different customers, the data transmitted can then be recorded on two different occasions using two different customer-specific encryptions. In accordance with a preferred embodiment of the invention the data is encrypted customer-specifically so that only such a customer knows the cryptographic algorithm and/or the cryptographic key required for decrypting the data, whose terminal the at least one party 20, 30, 40 or 50 of the data transmission is. On account of such a customer-specific data encryption the data of different customers remains confidential in the common recorder 10. Even if a customer obtains data recorded into the recorder 10 of another customer, this customer is not able to use it, since only the customer to whom the data belongs knows how to decrypt the data. The data to be recorded can be encrypted in the recorder 10 or alternatively in another element of the telecommunication system. The data is recorded into the recorder 10 preferably in digital mode. The TETRA system used as an example is a digital system, wherefore the data to be transmitted is already in digital mode. If the invention is applied to an analogue telecommunication system, the data to be recorded is preferably converted into digital mode before encryption or recording.

In accordance with a preferred embodiment of the invention, all the data transmitted between two or more parties 20, 30, 40 or 50 of the telecommunication system is recorded, when at least one of the parties is the terminal of a particular customer. Thus, the customer of the system may determine in advance that all calls, where one of the parties is at least one of the terminals 20, 30, 40 or 50 of said customer, are recorded into the recorder 10. Then again, in accordance with an embodiment, some of the data transmitted between two or more parties 20, 30, 40 or 50 of the telecommunication system is recorded on the basis of the predetermined criteria of such a customer, whose terminal is at least one of said parties. On this account, the customer of the system may determine certain criteria in advance, on the basis of which the data transmitted including at least one of the customer's terminals 20, 30, 40 or 50 as parties is recorded into the recorder 10. Such criteria include for instance a parameter in the data to be transmitted indicating that the recording must be performed, or a priority level of the data to be transmitted. For example, it may be determined that emergency calls are recorded, but other calls are not. Furthermore, in accordance with an embodiment the data transmitted between two or more parties 20, 30, 40 or 50 in the telecommunication system is recorded in response to a request of such a customer, whose terminal 20, 30, 40 or 50 is at least one of said parties. In accordance with this embodiment the customer informs the system when the data to be transmitted, such as a certain call, should be recorded. In the TETRA system, such an announcement can be provided for instance concerning the dispatcher system 20 of the customer. A situation may be presented as an example, in which an emergency call arrives at the dispatcher system 20 of a particular customer from a terminal of said customer or from another terminal, and the emergency call is to be recorded. The particular customer then sends a request from the dispatcher system 20 thereof to the recorder 10 for recording the emergency call in order to be checked later on if need be. The recorder 10, in turn, records the call in question as a response to the request.

In accordance with a preferred embodiment of the invention, the customer-specific encryption of data is carried out using asymmetrical encryption technique based on a public or secret key. RSA encryption (Rivest, Shamir, Adleman public key encryption) is an example of a cryptographic operation, which employs a public key and a secret key functioning as a pair. The data is encrypted using the public key and the data is decrypted, in turn, using the secret key. In order to successfully encrypt data and to decrypt data, the encrypter and decrypter should be provided with such a pair of keys enabling such an operation. In accordance with this, a public cryptographic key is preferably formed for each customer in the system and a corresponding secret key in such a manner that the data encrypted using the public key can be decrypted using the secret key. After this, the data transmitted between two or more parties 20, 30, 40 or 50 in the telecommunication system can be recorded into the recorder 10 in encrypted form by encrypting the data using the public key of such a customer, whose terminal is at least one of the parties 20, 30, 40 or 50 involved in data transmission, whereby the encryption becomes customer-specific. In accordance with a preferred embodiment of the invention, the customer of the system forms the public or secret key himself/herself. In addition, the public key is preferably forwarded from the customer to the recorder 10 or to another unit in the telecommunication system that carries out the encryption for encrypting the customer's data. Forwarding only the public key of the customer to the awareness of the telecommunication system, the system is able to encrypt only the data of the customer concerned, but not the decryption. Only the customer himself/herself then knows his/her specific secret key and is able to decrypt the encryption of his/her data. This naturally increases the information security in the common recorder 10. For example in the TETRA system, the pair of keys is preferably created in connection with the dispatcher system 20 of each customer. The public key of the customer used to encrypt the customer's data, can be forwarded to the recorder 10 or to another unit in the telecommunication system that carries out the encryption, in the dispatcher system 20 for instance in advance or separately in connection with each possible recording request. Each customer is preferably provided with a new public key and secret key at certain predetermined intervals in order to maintain information security. How frequently new keys are provided, depends upon the system to which the invention is applied. Likewise, the length of the keys to be used depends upon the capacity of the system as well as the desired information security level. When RSA encryption is used, it is preferable to employ for instance a key length of at least 128 bits. However, this is not relevant for the basic idea of the invention.

How the data is recorded into the recorder 10 naturally depends on the type of recorder used. For example, when a tape recorder is concerned, the data typically has to be recorded on tape consecutively. When a hard disc or the like is employed, the data can typically be arranged more freely and grouped for instance customer-specifically. The recorder 10 may also operate so as to record the data at first on a hard disc and transfer the recorded data later at a more appropriate time on customer-specific tapes. Depending on the capacity of the system used for encryption and recording, a buffer memory may be required in the recorder 10, for example a RAM memory, to which for instance a call is at first recorded and from which the call is later transferred for example to a disc or tape recorder and encrypted at the same time. Thus, the encryption of data does not necessarily have to be carried out in real time, which might require a large capacity of the encryption system, for instance while using an extensive cryptographic key. Such a buffering does not necessarily cause any problems to the systems mainly transferring calls (speech and data calls), since the length of a call is generally, however, restricted in average, whereby the recording and encryption system need not be dimensioned for real time recording of a continuous information flow.

The encrypted data is preferably recorded in such a manner that a certain recorded sequence, such as a call or a part of a call or another data assembly, is identified without having to decrypt the data, in order to forward the data requested by the customer rapidly and safely to the customer using the recorder 10. A part of a possible title or a corresponding part of the data sequence to be recorded can for instance be left unencrypted, on the basis of which the data sequence can be identified for later use. Plain identification data may comprise for instance a consecutive number, the identifier of the customer and/or the time when the data was recorded. In connection with the recording, the recorder 10 may also provide the data sequences to be recorded with identifiers, for instance on the basis of the customer and the time. When the customer wants to have access to the data recorded into the recorder 10, a request is sent to the recorder 10, which returns the required data to the customer in response to the request. The request can be carried out for instance from the dispatcher system 20 or from another terminal 30, 40 or 50. The request comprises the identification data on the recorded data sequences, which are to be returned. The data can be decrypted already prior to providing the customer with the data, but preferably the data is returned to the customer in encrypted form, whereby the customer decrypts the data himself/herself for instance in the dispatcher system 20. While employing the above public key method according to a preferred embodiment in such a manner that only the customer knows the secret key required for decryption, then only the customer himself/herself is naturally able to carry out the decryption. If the cryptographic key pair is changed regularly, the keys used should be registered in order to be able to decrypt older data sequences as well. Such a registration may be based on for instance the recording time of the data sequence or to another identification data and may preferably be carried out by the customer, for example in the dispatcher system 20. For instance the TETRA system may also employ a separate end-to-end encryption, whereby the data moving between the terminals 20, 30, 40 or 50 is transmitted in encrypted form. Thus, the cryptographic keys or the like used for end-to-end encryption should also be registered in order to be able to decrypt the end-to-end encryption at a later date while reading the previously recorded data.

The recorder 10 may be located in accordance with Figure 2 in the exchange DXT or in a corresponding system element and record only the data transmitted through said element. Figure 3 shows an optional implementation, in which the telecommunication system comprises several exchange DXTs provided with one common recorder 10. In such a case, the recorder 10 records data transmitted through any exchange DXT. Consequently, the exchanges DXT are arranged to operate in such a manner that they forward if need be the data to be recorded and transferred through them also to the recorder 10 for recording, even though the data concerned would not otherwise travel through for example said exchange, in which the recorder 10 is located. The telecommunication system may also comprise more than one recorders 10 for each exchange DXT, depending on the required recording capacity for example. The recorder or the recorders 10 may also be located in another system element than the exchange DXT without being relevant for the basic idea of the invention.

It is obvious for those skilled in the art that as technology advances the basic idea of the invention can be implemented in various ways. The invention and the embodiments thereof are therefore not restricted to the above examples but may vary within the scope of the claims.

## Claims

1. A method for recording data in a telecommunication system used for data transmission by at least two customers having one or more terminals connected to the system, whereby the system transmits data between the terminals of each customer, **characterized in that** the telecommunication system comprises at least one recorder common for at least two customers, and the method comprises a step of
recording the data transmitted in the system between two or more parties into said recorder in encrypted form by customer-specifically encrypting the data according to which customer's terminal at least one of said parties is.

2. A method as claimed in claim 1, **characterized in that** the data is encrypted customer-specifically so that only such a customer knows the cryptographic algorithm and/or cryptographic key required for decrypting the data, whose terminal is at least one of the parties involved in the data transmission.

3. A method as claimed in claim 1 or 2, **characterized in that** all the data transmitted in the system between two or more parties is recorded, when at least one of the parties is a terminal of a particular customer.

4. A method as claimed in claim 1 or 2, **characterized in that** some of the data transmitted in the system between two or more parties is recorded on the basis of certain predetermined criteria of such a customer, whose terminal is at least one of said parties.

5. A method as claimed in claim 1, 2 or 4, **characterized in that** the data transmitted in the system between two or more parties is recorded in response to a request of such a customer, whose terminal is at least one of said parties.

6. A method as claimed in any one of claims 1 to 5, **characterized in that** the method also comprises a step of
forming a public cryptographic key for each customer and a secret key corresponding thereto, whereby the encryption carried out using the public key is decryptable with the secret key, in which case
recording the data transmitted in the system between two or more parties into the recorder in encrypted form by encrypting the data using the public key of such a customer, whose terminal is at least one of said parties.

7. A method as claimed in claim 6, **characterized in that** the customer forms the public and secret keys.

8. A method as claimed in claim 7, **characterized in that** the public key is provided from the customer to the recorder in order to encrypt the customer's data.

9. A method as claimed in claim 6, 7 or 8, **characterized in that** a new public and secret key is formed at certain predetermined intervals.

10. A method as claimed in any one of claims 6 to 9, **characterized in that** the encryption method to be used is an RSA method (Rivest, Shamir, Adleman).

11. A telecommunication system used for data transmission by at least two customers having one or more terminals (20, 30, 40 50) connected to the system, whereby the system is arranged to transmit data between the terminals (20, 30, 40, 50) of each customer, **characterized in that** the telecommunication system comprises
at least one recorder (10) common for at least two customers, whereby the system is also arranged to record the data transmitted in the system between two or more parties (20, 30, 40, 50) into said recorder in encrypted form by encrypting the data customer-specifically according to which customer's terminal at least one of said parties is.

12. A telecommunication system as claimed in claim 11, **characterized in that** the system is arranged to encrypt said data customer-specifically so that only such a customer knows the cryptographic algorithm and/or the cryptographic key required for the decryption of the data, which customer's terminal at least one of said data transmission parties (20, 30, 40, 50) is.

13. A telecommunication system as claimed in claim 11 or 12, **characterized in that** the system is arranged to record all the data transmitted in the system between two or more parties (20, 30, 40, 50), when at least one party is a terminal of a particular customer.

14. A telecommunication system as claimed in claim 11 or 12, **characterized in that** the system is arranged to record some of the data transmitted in the system between two or more parties (20, 30, 40, 50) on the basis of certain predetermined criteria of such a customer, whose terminal is at least one of said parties.

15. A telecommunication system as claimed in claim 11, 12 or 14, **characterized in that** the system is arranged to record the data transmitted in the system between two or more parties (20, 30, 40, 50) in response to the request of such a customer, whose terminal is at least one of said parties.

16. A telecommunication system as claimed in any one of claims 11 to 15, **characterized in that** a public cryptographic key is formed for each customer as well as a secret key corresponding thereto, whereby the encryption of the data carried out using the public key is decryptable using the secret key, and the system is arranged to record the data transmitted in the system between two or more parties (20, 30, 40, 50) into said recorder (10) in encrypted form by encrypting the data using the public key of such a customer, whose terminal is at least one of said parties.

17. A telecommunication system as claimed in claim 16, **characterized in that** the customer forms the public and secret key, whereby the system is arranged to receive the public key from the customer in order to encrypt the customer's data.

18. A telecommunication system as claimed in claim 16 or 17, **characterized in that** the encryption method to be used is an RSA method (Rivest, Shamir, Adleman).

19. A recorder in the telecommunication system, which system is used for data transmission by at least two customers having at least one or more terminals (20, 30, 40, 50) connected to the system, whereby the system transmits data between the terminals (20, 30, 40, 50) of each customer, **characterized in that**
the recorder (10) is common for at least two customers, whereby the recorder is arranged to record the data transmitted in the system between two or more parties (20, 30, 40, 50) into the recorder in encrypted form by encrypting the data customer-specifically according to which customer's terminal at least one of said parties is.

20. A recorder as claimed in claim 19, **characterized in that** the recorder (10) is arranged to encrypt said data customer-specifically so that only such a customer knows the cryptographic algorithm and/or cryptographic key required for decrypting the data, whose terminal is at least one of said parties (20, 30, 40, 50) involved in the data transmission.

21. A recorder as claimed in claim 19 or 20, **characterized in that** the recorder (10) is arranged to record the data transmitted in the system between two or more parties (20, 30, 40, 50), when at least one of said parties (20, 30, 40, 50) is a terminal of a particular customer.

22. A recorder as claimed in claim 19 or 20, **characterized in that** the recorder (10) is arranged to record some of the data transferred in the system between two or more parties (20, 30, 40, 50) on the basis of certain predetermined criteria of such a customer, whose terminal is at least one of said parties.

23. A recorder as claimed in claim 19, 20 or 22, **characterized in that** the recorder (10) is arranged to record the data transmitted in the system between two or more parties (20, 30, 40, 50) in response to the request of such a customer, whose terminal is at least one of said parties.

24. A recorder as claimed in any one of claims 19 to 23, **characterized in that** each customer is provided with a public cryptographic key and a secret key corresponding thereto, whereby the data encrypted using the public key is decryptable using the secret key, and the recorder (10) is arranged to record the data transmitted in the system between two or more parties (20, 30, 40, 50) in encrypted form by encrypting the data using the public key of such a customer, whose terminal is at least one of said parties.

25. A recorder as claimed in claim 24, **characterized in that** the customer forms the public and the secret key, whereby the recorder (10) is arranged to receive the public key from the customer for encrypting the customer's data.

26. A recorder as claimed in claim 24 or 25, **characterized in that** the encryption method used is an RSA method (Rivest, Shamir, Adleman).

27. A recorder as claimed in any one of claims 19 to 26, **characterized in that** the telecommunication system comprises one or more exchanges (DXT), whereby the recorder (10) is exchange-specific.

28. A recorder as claimed in any one of claims 19 to 26, **characterized in that** the telecommunication system comprises one or more exchanges (DXT), whereby the recorder (10) is common for at least two exchanges.
